# EUROPÄISCHE PATENTSCHRIFT

(11) **EP 0 585 920 B1**
(45) Veröffentlichungstag und Bekanntmachung des Hinweises auf die Patenterteilung: **02.12.1998**
(21) Anmeldenummer: 93114053.7
(22) Anmeldetag: 02.09.1993
(51) Int. Cl.: G01F 1/36, G01F 1/26, G01F 7/00

(54) **Durchflussmesser zur Bestimmung strömender Medien**
Flow meter for the determination of flowing media
Débimètre pour la détermination de l'écoulement des substances fluides

(30) Priorität: 03.09.1992 DE 4229382
(43) Veröffentlichungstag der Anmeldung: 09.03.1994
(73) Patentinhaber: KNORR-BREMSE AG, 80809 München (DE)
(72) Erfinder: Huber, Erich, D-80333 München (DE); Gasper, Gerhard, D-80997 München (DE)

(56) Entgegenhaltungen:
- EP-A- 0 124 218
- DE-A- 2 704 048
- DE-A- 3 713 542

## Beschreibung

Die vorliegende Erfindung befaßt sich mit einem Durchflußmesser zur Bestimmung strömender Medien, insbesondere zur Bestimmung eines strömenden Gases innerhalb einer Druckleitung einer Bremsanlage eines Fahrzeugs, vorzugsweise eines Schienenfahrzeugs, wobei es darauf ankommt, einen möglichst weiten Meßbereich zu überstreichen.

Durchflußmesser zur Mengenbestimmung strömender Medien unter Verwendung einer Blende und einem Widerstandskörper in einem Hohlraum, der eine Zu- und Ablußöffnung aufweist, sind aus der Offenlegungsschrift DE 37 13 542 im Stand der Technik wohl bekannt. Dieser Druckschrift ist ein Durchflußgeschwindigkeits-Meßgerät zu entnehmen. Die Durchflußgeschwindigkeit des Mediums wird aufgrund des gemessenen Differenzdrucks vor und hinter einer Blende ermittelt. Die Öffnungsfläche dieser Blende ist variabel, so daß der Differenzdruck in Abhängigkeit von dem durchströmenden Medium mittels eines Stellgliedes konstant gehalten werden kann. Die Blende ist fest im Körper des Durchflußgeschwindigkeits-Meßgeräts integriert. Der kegelstumpfförmige Ventilkörper ist mit einer Federkraft in Richtung der Öffnung der Blende druckbeaufschlagt, so daß das Stellglied entgegen der Federkraft die Durchflußöffnung der Blende öffnet. Der Differenzdruck wird in diesem Gerät mittels zweier Sensoren gemessen, die ein elektrisches Signal erzeugen und dieses einem elektronischen Schaltkreis zuführen. Aus dem Differenzdruck und dem Hub des Ventilkörpers wird ein Durchflußkoeffizient errechnet, um damit die Durchflußgeschwindigkeit zu stimmen.

Nachteilig an diesem Durchflußgeschwindigkeits-Meßgerät wird empfunden, daß die Mechanik zu aufwendig ist, und daher kostenungünstig in der Herstellung erscheint. Ferner ist bei einem derartigen Gerät die Durchflußmenge auf einen verhältnismäßig kleinen Volumenstrom pro Zeiteinheit begrenzt und die Reaktionsfläche an der Blende kann bei dieser Konstruktion nicht beliebig groß gewählt werden, so daß hierdurch gewisse Einschränkungen in Kauf genommen werden müssen.

Beim Einbremsen oder Lösen einer pneumatischen Bremse im Eisenbahn-Bereich werden sehr unterschiedliche Luftvolumina pro Zeiteinheit benötigt, die von wenigen l/min bis im Extremfall > 6 000 l/min betragen können. Die benötigte Luftmenge richtet sich jeweils nach der Länge der Luftdruckleitung, d.h. für den Anwendungsfall einer pneumatischen Bremse eines Schienenzuges, von der Länge des Zuges. Die Länge der Züge ist jedoch stark unterschiedlich, so daß auch die Luftvolumina in weiten Grenzen schwanken.

Beim Zusammenstellen eines neuen Zuges wird ausgehend von einer Vollbremsung das Volumen der eingespeisten Luft bis zum vollständigen Lösen des Zuges gemessen und der Wert gespeichert. Bei jeglichen weiteren Lösemanövern wird immer das beim Lösen in die Hauptleitung einströmende Volumen mit dem Speicherwert verglichen, woraus Änderungen der Zugkonfiguration (z.B. versehentliches Schließen eines Absperrventils in einem Wagen) oder sonstige Störfälle erkannt werden können.

Daher ist es wichtig, eine verhältnismäßig genaue Volumenbestimmung des durchströmenden Gases bei einer Bremssteuerung vorzunehmen. Für eine derartige Durchflußmessung bietet sich das sogenannte Schwebekörper-Durchflußmessverfahren an. Das Prinzip des Schwebekörper-Durchflußmessers beruht auf einem Widerstandskörper, der von einem Medium umspült wird. Der Widerstandskörper befindet sich entweder in einem konischen Meßrohr oder der Widerstandskörper selbst ist konisch und liegt in der Nähe der Durchflußöffnung einer Meßblende. Der Widerstandswert c_{w} des Schwebekörpers ändert sich in Abhängigkeit von der Entfernung zur Meßblende. Somit ist die Kraft F die vom Medium auf den Widerstandskörper ausgeübt wird proportional dem Widerstandswert c_{w}. Der Zusammenhang der Kraft F mit der Strömungsgeschwindigkeit ergibt sich durch das aus der Aerodynamik bekannte Widerstandsgesetz.

Aufgabe der vorliegenden Erfindung ist es, einen Durchflußmesser bereitzustellen, der in einem bestimmten Durchflußmengen-Bereich einen in etwa linearen Verlauf Δp (V̇) gewährleistet, einfach im Aufbau, kostengünstig in der Herstellung und robust im Einsatz ist.

Diese Aufgabe wird erfindungsgemäß mit den Merkmalen des Kennzeichen des Hauptanspruchs gelöst. Vorteilhafte Weiterbildungen und Ausgestaltungen der vorliegenden Erfindung sind den Unteransprüchen zu entnehmen.

Der erfindungsgemäße Durchflußmesser zur Mengenbestimmung strömenden Mediums unter Verwendung einer Blende und einem Widerstandskörper in einem Hohlraum, der eine Zu- und Abflußöffnung aufweist, wobei der Differenzdruck zwischen Zu- und Abfluß mittels der Blende gemessen wird, zeichnet sich dadurch aus, daß die Blende, die mit einer Rückstellkraft beaufschlagt ist, von einem ersten definierten Punkt aus axial verschiebbar ist; der Widerstandskörper mindestens eine in Längsrichtung verlaufende Überströmnut aufweist, deren Querschnittsfläche variabel ist; und die Lage des Widerstandskörpers axial einstellbar ist.

Vorteilhaft und wesentlich ist es für die vorliegende Erfindung, daß die Meßblende mit der Kraft einer variabel einstellbaren Rückstellfeder beaufschlagt ist. Die Meßblende selbst ist in vorteilhafter Weise als Hülse ausgeführt, so daß diese Blendenhülse zwischen zwei definierten Punkten durch den Druck bzw. die Kraft des strömenden Mediums axial verschoben werden kann. Die Führung für die Blendenhülse ist durch einen zylinderförmigen Widerstandskörper gegeben, auf dessen Oberfläche sich in Längsrichtung mindestens eine Überströmnut befindet. Hierbei erweist es sich als äußerst vorteilhaft, daß der Widerstandskörper mittels einer Gewindestange axial verschoben werden kann, wodurch sich eine optimale Einstellung zur genauen Durchflußmessung ergibt. Vorteilhaft ist es auch, daß der erste definierte Punkt der Blende etwa am Anfang der Überströmnut in Strömungsrichtung liegt. Hierdurch wird die Überströmnut quasi von der Durchströmung des Mediums ausgeschlossen, so daß lediglich in dieser ersten definierten Stellung eine sogenannte Leckrate den Durchflußmesser durchströmen kann.

Diese Leckrate stellt die Anfangsströmung des Durchflußmessers dar und ist in Abhängigkeit vom Differenzdruck (Δp) nicht linear. Um diese Leckrate zu gewährleisten, ist es vorteilhaft auf der Reaktionsfläche der Meßblende mindestens eine Nut anzubringen, die die Anschlagfläche des ersten definierten Anschlagpunktes überbrückt. Durch diese Maßnahme wird ein "Flattern" der Meßhülse vermieden.

Um dem Widerstandskörper einen ausreichenden Halt zu bieten, ist dieser vorteilhafter Weise an seinem der Gewindestange gegenüberliegenden Ende mit einer Gleitführung versehen, die in Form einer Bohrung ausgebildet ist.

Die Passungen an den Führungsflächen der Blendenhülse sollten vorteilhaft so gewählt werden, daß eine gewünschte Leckrate gewährleistet ist. Ebenso ist es vorteilhaft, die Führungsflächen verschleißresistent auszubilden.

Auch ist es in bezug auf eine robuste Ausführung vorteilhaft, den von der Meßblende erzeugten Differenzdruck Δp mittels zweier Drucksensoren unabhängig voneinander aufzunehmen und die von den Drucksensoren erzeugten elektrischen Signale zur weiteren Verarbeitung einem elektronischen Schaltkreis zuzuführen.

Im nun folgenden wird anhand von Zeichnungen die vorliegende Erfindung im Detail näher beschrieben. Es zeigt
- Fig.1: eine Schnittdarstellung der erfindungsgemäßen Vorrichtung zur Durchflußmessung strömender Medien;
- Fig.2: eine Schnittdarstellung einer weiteren erfindungsgemäßen Ausführungsform der Meßblende (4) und des Widerstandskörpes (5);
- Fig.3: ein Blockschaltbild des den Druck aufnehmenden Sensoren nachgeschalteten elektronischen Schaltkreises mit zwei Relativdruckaufnehmern (29,30);
- Fig.4: ein Blockschaltbild des den Druck aufnehmenden Sensoren nachgeschalteten elektronischen Schaltkreises mit einem Relativdruck- (29) und einem Differenzdruckaufnehmer (36);
- Fig.5: ein Diagramm zur Darstellung des qualitativen Zusammenhangs zwischen Δp und V̇ für drei verschiedene Meßbereiche (BI,BII,BII);
- Fig.6: eine graphische Darstellung des Zusammenhangs zwischen dem Differenzdruck Δp = p1 - p2 und dem Volumenstrom V̇.

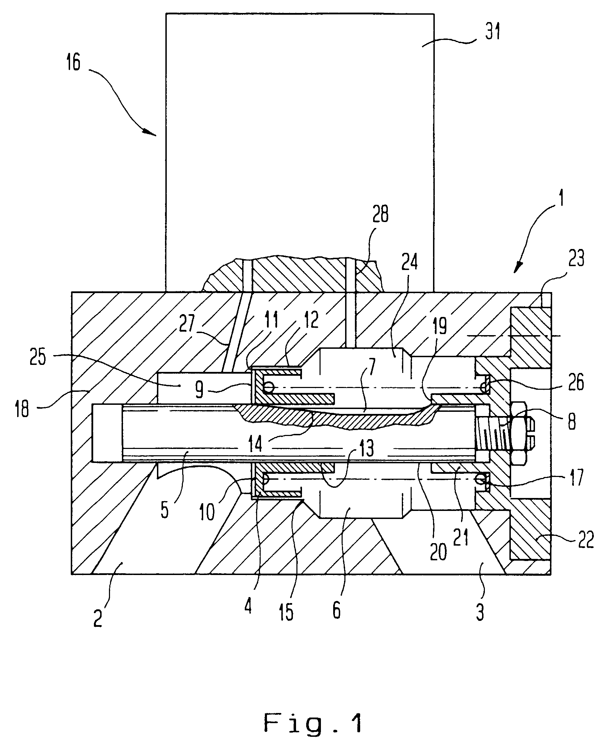

In Fig.1 ist ein erfindungsgemäßer Durchflußmesser zur Bestimmung strömenden Mediums in einer Schnittdarstellung schematisch wiedergegeben. Der erfindungsgemäße Durchflußmesser 1 besteht im wesentlichen aus der Meßblende 4 und dem Widerstandskörper 5, die beide im Strömungskanal zwischen dem Einlaßstutzen 2 und dem Auslaßstutzen 3 angeordnet sind. Die nicht dargestellte Leitung durch die das zu messende Medium strömt, wird an die Öffnungen 2,3 angeschlossen.

Der zu messende Gasstrom tritt in die Zuflußöffnung 2 ein, so daß in dem Raum vor der Meßblende 4 ein Druck (p1) entsteht, der auf die Reaktionsfläche 9 eine Kraft (F) ausübt und damit entgegen der Federkraft der Feder 17 die Blendenhülse 4 soweit zurückdrängt, bis die beiden Kräfte im Gleichgewicht stehen.

Im Ruhezustand befindet sich die Reaktionsfläche 9 der Meßblende 4 im Anschlag mit der Anschlagfläche 11 des ersten definierten Anschlagpunktes. In dieser Stellung der Meßhülse 4 strömt lediglich eine geringe Leckrate über die radial verlaufenden auf der Reaktionsfläche 9 befindlichen Nuten 10 in die Zwischenräume zwischen dem Gehäuse 18 und der Gleitfläche der Blendenhülse 4. Daher ist die Hülse und die Bohrung mit einer entsprechenden Passung, z.B. H7, zu versehen, um die sogenannte Null-Leckrate zu gewährleisten. Diese erfindungsgemäße mindestens eine Nut 10 auf der Reaktionsfläche 9 der Meßblende 4 ist von besonderer Bedeutung für das ruhige Verhalten der axial verschieblichen Meßblende 4. Ohne diese Nut 10 würde die Meßblende 4 je nach Gewicht und Reibung eine eigenfrequente Schwingung durchführen, die die Betriebssicherheit des Durchflußmessers gefährden kann.

Der geringe Luftspalt zwischen der Führungsfläche 12 und dem Gehäuse 18 stellt praktisch eine wirksame Drossel dar.

Besonders wichtig für die einwandfreie axiale Verschiebung vom ersten definierten Anschlagpunkt 11 bis zum zweiten definierten Anschlagpunkt 19 ist die einwandfreie Führung der Meßhülse 4, die dadurch bewirkt wird, daß zwischen den Überströmnuten 7 im Widerstandskörper 5 Führungsstege 20 vorgesehen sind, auf denen die Blendenhülse 4 mit ihrer inneren Gleitfläche 13 reibungsarm geführt wird.

Der zweite definierte Anschlagpunkt 19 ist die Oberkante einer feststehenden Hülse 21, die mit ihrer Bohrung ein Ende des Widerstandskörpers 5 aufnimmt und ihm einen sicheren Halt bietet.

Im vorliegenden Ausführungsbeispiel der Erfindung befinden sich drei Überströmnuten 7 auf der Oberfläche des Widerstandskörpers 5. Die Kontur 14 der Nuten entspricht einer mathematischen Funktion, welche in erster Näherung einer quadratischen Funktion entspricht. Aufgrund dieser spezifischen Kurvenform ist es möglich, die Funktion Δp (V̇) in einem bestimmten Bereich zwischen 200 und 3 000 l/min zu linealisieren. Mit anderen Worten heißt das also, daß durch die geometrische Formgebung der Überströmnuten die Kurvenform weitgehend linealisiert werden kann.

Eine weitere Einstellmöglichkeit des schwingungsfähigen Systems der Meßblende 4 ist durch die variable Druckfeder 17 gegeben. Die Federkraft der Druckfeder kann in gewissen Grenzen dadurch verstellt, werden, indem der Deckel 22 an seinem äußeren Umfang ein Gewinde 23 aufweist, oder alternativ dazu durch Einlegen eines Distanzringes 26 in eine Nut in einen axial verschraubten Deckel 22 mittels derer die Druckfeder 17 mehr oder weniger vorgespannt werden kann.

Zur weiteren Feinabstimmung der Durchflußmessung dient die Gewindestange 8, mit der der Widerstandskörper 5 axial verschoben werden kann. Mit diesen erfindungsgemäßen Maßnahmen zur Abstimmung einer genauen Messung wurden gute Meßergebnisse erzielt, die aufgabengemäß eine Linealisierung der Funktion Δp (V̇) in einem bestimmten Meßbereich mit einfachen Mitteln gestattet.

Der Hohlraum 24 hinter der Meßhülse 4 weist einen wesentlich höheren Durchmesser auf als der Hohlraum 25 vor der Blendenhülse 4. Diese Aufweitung des Hohlraums 24 hinter der Meßblende 4 bewirkt, daß bei Verschiebung der Blendenhülse 4 über den Öffnungspunkt 15 hinaus, kurzzeitig sehr große Volumina (V̇ > 6 000 l/min) den Durchflußmesser durchströmen können, ohne einer genaueren Messung zugänglich zu sein. Dieses ist dann der Fall, wenn ein sogenannter "Füllstoß" vom Zugführer eines Eisenbahnzuges ausgeführt wird.

Von den Hohlräumen 24,25 führen zwei Meßbohrungen 27,28 zu den Drucksensoren 29,30, die den Druck vor und hinter der Meßblende 4 aufnehmen. Diese Meßsensoren 29,30 erzeugen ein elektrisches Signal. Die Sensoren befinden sich in einem Gehäuse 31, das über dem Körper des Durchflußmessers angeordnet ist.

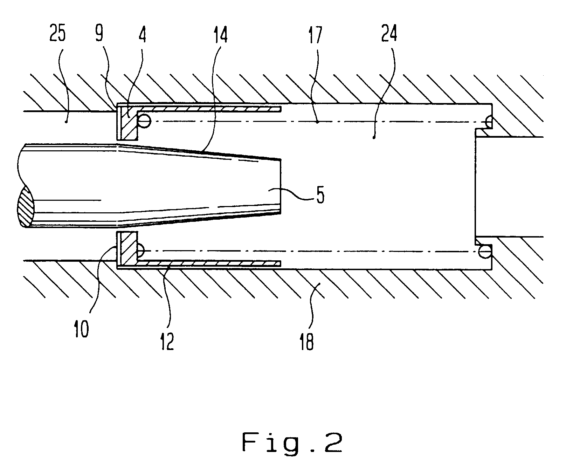

Die Fig.2 zeigt ein weiteres erfindungsgemäßes Ausführungsbeispiel in einer Prinzipdarstellung, bei der gleiche Teile mit gleichen Bezugszeichen versehen sind. In diesem Ausführungsbeispiel wird die Meßhülse ebenfalls infolge des Druckes auf die Reaktionsfläche 9 der Blendenhülse 4 entgegen der Federkraft der Druckfeder 17 zurückgedrängt, wodurch sich die Durchströmungsfläche des Durchflußmessers erhöht, da der Widerstandskörper 5 quasi kegelförmig ausgebildet ist. In der Grundstellung befindet sich die Meßblende 4 am dickeren Ende des als Kegelstumpf ausgebildeten Widerstandskörpers 5. In dieser Stellung strömt, wie weiter oben beschrieben wurde, eine Null-Leckrate infolge der Nut 10 und dem Zwischenraum zwischen der Führungsfläche 12 und dem Gehäusekörper 18. Durch die Wahl der Kontur 14 des Kegelstumpfs läßt sich ebenfalls eine Linearisierung eines Teilbereichs der Funktion Δp (V̇) erreichen.

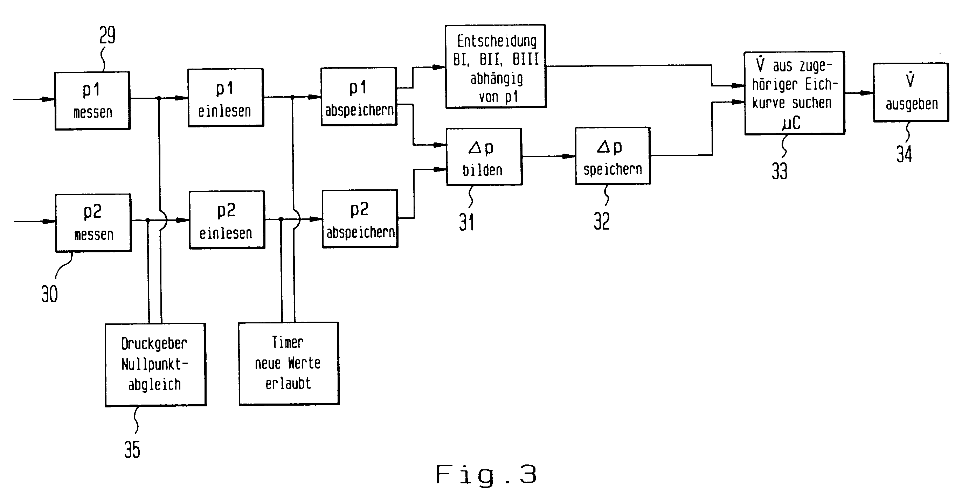

In Fig.3 ist ein Blockschaltbild des elektronischen Schaltkreises zur Verarbeitung der Sensorsignale gezeigt. Die Drücke (p1) im Raum 25 vor der Blende und (p2) im Raum 6 nach der Blende werden den elektronischen Eingangskreisen 29,30 zugeführt. Diese Analogsignale werden in digitale Signale gewandelt und gespeichert. Durch Subtraktion der Werte p1 - p2 in der Einheit 31 wird der Differenzdruck Δp berechnet und hernach in der Einheit 32 abgespeichert. Durch eine in einem Mikrocomputer 33 abglelegte Softwareroutine wird mit Kenntnis von (p1) jedem Δp durch Zugriff auf eine entsprechende abgelegte Eichkurve im Speicher ein entsprechender V̇-Wert zugewiesen und abgespeichert. Über eine digitale Schnittstelle 34 kann dieses V̇-Signal weiterverarbeitet werden und nach einer Digital/Analog-Wandlung auf einem nicht gezeigten Display zur Anzeige gebracht werden.

Über ein vom Quellenprogramm gesteuertes Unterprogramm werden die Null-Punkt-Abweichungen, z.B. infolge von Temperatureinflüssen oder Alterung der beiden Drucksensoren 29,30 mit der Einheit 35 zum Null-Punktablgeich vorgenommen.

Mit Hilfe eines Fehlerprogramms werden die Eingangsdrücke und der Differenzdruck überprüft und im Fehlerfall wird dann ein Signal ausgegeben.

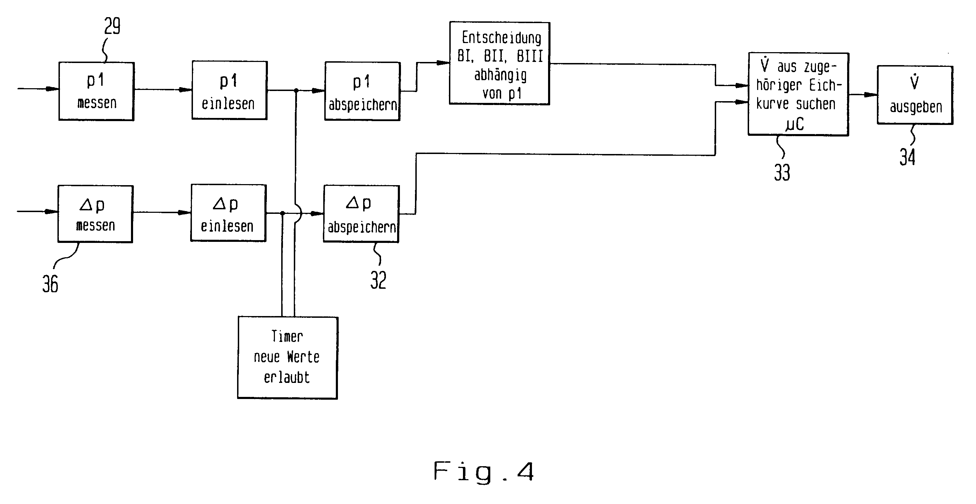

In Fig.4 wird eine Variante zu Fig.3, zur Auf- und Weiterverbeitung der Drücke vor und hinter der Blende dargestellt.

Hierbei wird der Druck (p1) im Raum 25 durch den Sensor 29 und der Differenzdruck Δp (p1 - p2) direkt durch den Sensor 36 gemessen, A/D gewandelt und an eine nachgeschaltete Elektronik zur Weiterverarbeitung übergeben, wie es bereits in Fig.3 beschrieben wurde.

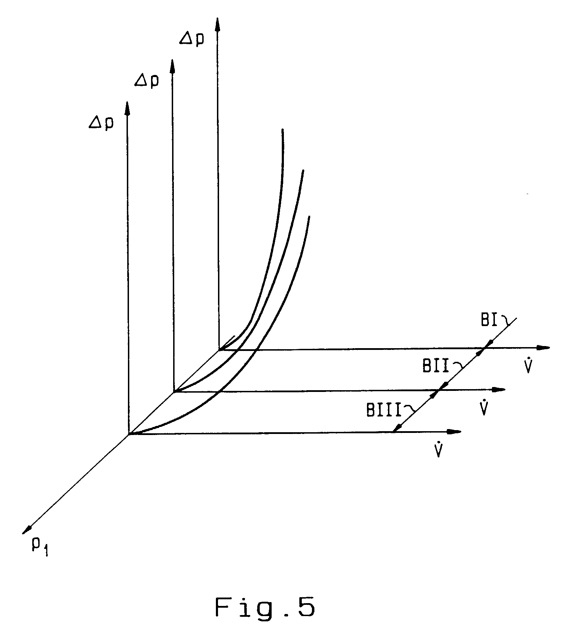

In Fig.5 wird der funktionale Zusammenhang zwischen dem Differenzdruck Δp und dem spezifischen Volumenstrom V̇ für drei verschiedene Primär-Meßbereiche BI,BII,BIII dargestellt. Der Meßbereich BI reicht beispielsweise von 0 bis < 7 bar; der Meßbreich BII von ≥ 7 bis < 8,5; und der Meßbereich BIII von ≥ 8,5 bis 10 bar. Aus dieser Darstellung ist ersichtlich, daß der Verlauf der Kurve im Meßbereich BI sehr viel steiler ist als der im Meßbereich BIII, was dadurch hervorgerufen wird, daß ein niedrigerer Primärdruck eine geringere Meßblendenverschiebung zur Folge hat und sich somit ein kleinerer Volumenstrom einstellt. Um den Einfluß des Primärdrucks und sämtlicher Bearbeitungstoleranzen auf den Volumenstrom V̇ zu erfassen, werden für jedes Gerät charakeristische Eichkurven empirisch aufgenommen und als Parametertabelle oder als mathematische Funktion in einem geeigneten elektronischen Speicher abgespeichert.

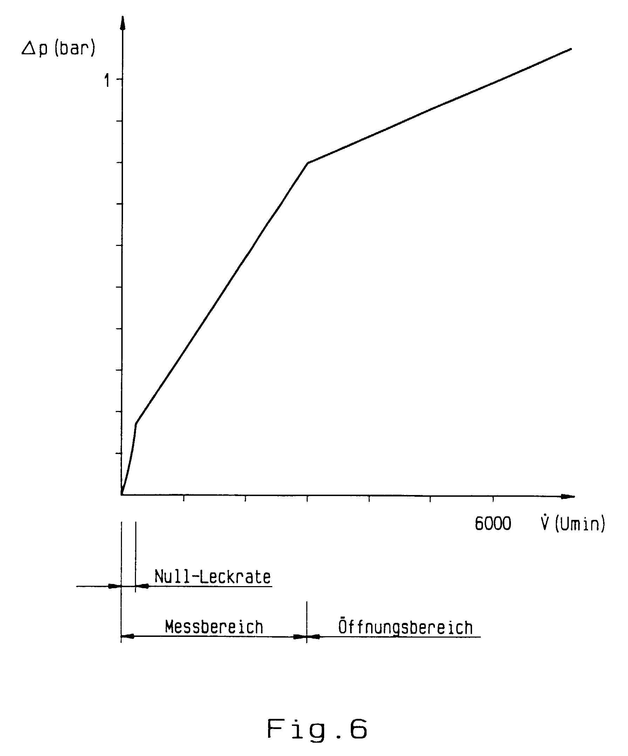

In Fig.6 ist eine graphische Darstellung ersichtlich, die den Zusammenhang zwischen dem Differenzdruck Δp = p1 - p2 in Abhängigkeit vom Volumenstrom V̇ einer am erfindungsgemäßen Durchflußmesser gemessenen Kurve wiedergibt. Im Meßbereich zwischen 0 und < 0,2 bar strömt die oben erwähnte Null-Leckrate, deren Verlauf nicht linear ist. Der für den vorliegenden Anwendungsfall interessante Bereich liegt zwischen 0,2 und 1 bar. Dieser Bereich konnte mit den geschilderten erfindungsgemäßen Maßnahmen zur genauen Messung des Durchflusses eines strömenden Mediums erzielt werden.

Die mit der vorliegenden Erfindung erzielten Vorteile sind vorallem darin zu sehen, daß durch die erfindungsgemäße Blendenhülse 4 eine verhältnismäßig große Reaktionsfläche 9 für den Staudruck (p1) zur Verfügung steht. Ferner konnte durch die erfindungsgemäße Anordnung des Widerstandskörpers 5 und der Blendenhülse 4 eine einfache unkomplizierte Vorrichtung bereitgestellt werden, die durch die Formgebung der erfindungsgemäßen Überströmnuten bzw. Konturen eine befriedigende Linealisierung der Funktion Δp (V̇) gewährleistet.

Von besonderem Vorteil gegenüber dem Stand der Technik ist die Tatsache zu werten, daß durch den Volumenstrom über die Festdüse vor dem Öffnen der Steuerhülse die Gefahr einer erzwungenen Schwingung der Blendenhülse 4 weitgehend herabgesetzt wurde.

Auch konnte durch die erfinderische Maßnahme der Innenführung der Blendenhülse eine annähernd hysteresefreie Führung der Blendenhülse 4 erzielt werden. Von besonderer Wichtigkeit für die genaue Messung und Linearisierung der Kennlinie ist die konstruktive erfinderische Gestaltung der Blendengeometrie und die Variation der Vorspannung der Regelfeder 10 sowie die axiale Verschiebung des Widerstandskörpers 5; ebenso die Druckbereichsbegrenzung durch einen ersten und einen zweiten Anschlagpunkt, sowie die Durchlaßschaltung des Durchflußmessers durch den Öffnungspunkt 15 der erfindungsgemäßen Meßblende 4.

### Kurzfassung:

Mit der vorliegenden Erfindung wird ein Durchflußmesser zur Mengenbestimmung strömenden Mediums unter Verwendung einer Blende (4) und einem Widerstandskörper (5) in einem Hohlraum (6), der von dem zu messenden Medium durchströmt wird, vorgelegt. Dieser erfindungsgemäße Durchflußmesser hat die Besonderheit, daß nicht der Widerstandskörper (5), sondern eine Blendenhülse (4) infolge des variierenden Primärdrucks verschoben wird und somit den Öffnungsgrad der Durchflußblende je nach Durchflußmenge des strömenden Mediums bestimmt. Mit dem vorgestellten Durchflußmesser wurde eine befriedigende Linearisierung eines Teilbereichs der Funktion Δp (V̇) erzielt.

### Bezugszeichenliste

- 1: Durchflußmesser
- 2: Zuflußöffnung
- 3: Abflußöffnung
- 4: Blendenhülse
- 5: Widerstandskörper
- 6: Hohlraum
- 7: Überströmnut
- 8: Gewindestange
- 9: Reaktionsfläche
- 10: Nut
- 11: erster definierter Anschlagpunkt
- 12: Führungsfläche
- 13: Führungsfläche
- 14: Strömungskörperkontur
- 15: Öffnungspunkt
- 16: Sensorgehäuse
- 17: Druckfeder
- 18: Durchflußmesser-Gehäuse
- 19: zweiter definierte Anschlagpunkt
- 20: Führungssteg
- 21: Hülse
- 22: Deckel
- 23: Gewinde
- 24: Hohlraum
- 25: Hohlraum
- 26: Distanzring
- 27: Zuleitung
- 28: Zuleitung
- 29: Sensor
- 30: Sensor
- 31: Δ p-Einheit
- 32: Δ p-Speicher
- 33: Mikrocomputer
- 34: Interface
- 35: Nullpunktabgleich-Einheit
- 36: Δ p-Sensor

## Patentansprüche

1. Durchflußmesser zur Mengenbestimmung strömender Medien unter Verwendung einer Blende (4) und eines Widerstandskörpers (5) in einem Hohlraum (6), der eine Zu- (2) und Abflußöffnung (3) aufweist, wobei der Differenzdruck zwischen Zu- und Abflußöffnung mittels der Blende (4) gemessen wird, dadurch gekennzeichnet, daß
- die Blende (4), die mit einer Rückstellkraft beaufschlagt ist, von einem ersten definierten Punkt aus axial verschiebbar ist;
- der Widerstandskörper (5) mindestens eine in Längsrichtung verlaufende Überströmnut (7) aufweist, deren Querschnittsfläche variabel ist; und
- die Lage des Widerstandskörpers (5) axial einstellbar ist.

2. Durchflußmesser nach Anspruch 1, dadurch gekennzeichnet, daß die Rückstellkraft der Blende (4) variabel ist.

3. Durchflußmesser nach Anspruch 1, dadurch gekennzeichnet, daß die axiale Verschiebung des Widerstandskörpers (5) mit einer Gewindestange (8) vorgenommen wird, die mit dem Widerstandskörper (5) in Verbindung steht.

4. Durchflußmesser nach Anspruch 1, dadurch gekennzeichnet, daß die Blende (4) zwischen dem ersten und einem zweiten definierten Punkt axial verschiebbar ist.

5. Durchflußmesser nach Anspruch 1, dadurch gekennzeichnet, daß die axiale verschiebbare Blende (4) die Form einer Hülse hat.

6. Durchflußmesser nach Anspruch 1 und 4, dadurch gekennzeichnet, daß der erste definierte Punkt etwa am Anfang der Überströmnut (7) in Strömungsrichtung liegt.

7. Durchflußmesser nach Anspruch 1, dadurch gekennzeichnet, daß mindestens eine Nut (7) in Strömungsrichtung eine quadratische Vergrößerung der Querschnittsfläche aufweist.

8. Durchflußmesser nach Anspruch 1, dadurch gekennzeichnet, daß die Reaktionsfläche (9) der Blende (4) groß gewählt ist.

9. Durchflußmesser nach Anspruch 5, dadurch gekennzeichnet, daß die Blendenhülse 4 auf dem Widerstandskörper (5) geführt wird.

10. Durchflußmesser gemäß dem Oberbegriff des Anspruchs 1, dadurch gekennzeichnet, daß die Blende (4), die mit einer Rückstellkraft beaufschlagt ist, von einem ersten definierten Punkt aus axial verschiebbar ist, daß die axial verschiebbare Blende (4) die Form einer Hülse hat, daß der Widerstandskörper (5) kegelstumpfförmig ausgebildet ist und die große Grundfläche des Kegelstumpfs in der Nähe des ersten definierten Anschlagpunktes der Blendenhülse (4) liegt.

11. Durchflußmesser nach einem der vorangegangenen Ansprüche, dadurch gekennzeichnet, daß die Reaktionsfläche (9) der Blende mindestens eine Nut (10) aufweist, die die Anschlagfläche (11) des ersten definierten Anschlagpunktes überbrückt.

12. Durchflußmesser nach einem der vorangegangenen Ansprüche, dadurch gekennzeichnet, daß der Widerstandskörper (5) an seinem der Gewindestange (8) gegenüberliende Ende eine Gleitführung mittels einer Bohrung erfährt.

13. Durchflußmesser nach einem der vorangegangenen Ansprüche, dadurch gekennzeichnet, daß die Passungen an den Führungsflächen (12,13) der Blendenhülse (4) so gewählt werden, daß eine gewünschte Leckrate gewährleistet ist.

14. Durchflußmesser nach Anspruch 13, dadurch gekennzeichnet, daß die Führungsflächen (12,13) verschleissresistent ausgebildet sind.

15. Durchflußmesser nach einem der vorangegangenen Ansprüche, dadurch gekennzeichnet, daß der Differenzdruck Δp vor und hinter der Blende (4) mittels zweier Drucksensoren (15,16) unabhängig voneinander aufgenommen wird, und jede der beiden Drucksensoren jeweils ein elektrisches Signal erzeugen.

16. Durchflußmesser nach Anspruch 15, dadurch gekennzeichnet, daß die elektrischen Signale zur weiteren Verarbeitung einem elektronischen Schaltkreis (16) zugeführt werden.

17. Durchflußmesser nach einem der vorangegangenen Ansprüche, dadurch gekennzeichnet, daß der Durchflußmesser nach Überfahren des Öffnungspunktes 15 in Durchlaßschaltung geht.

## Claims

1. Flow meter for establishing the quantity of flowing media, using an aperture (4) and a resistive body (5) in a cavity (6) having an inlet opening (2) and an outlet opening (3), with the differential pressure across said inlet and outlet openings being measured by means of said aperture (4), **characterised in** that
- said aperture (4), which is subjected to a restoring force, is axially displaceable from a first defined point;
- said resistive body (5) presents at least one overflow groove (7) extending in the longitudinal direction and having a variable cross-sectional area; and
- the position of said resistive body (5) is axially adjustable.

2. Flow meter according to Claim 1, **characterised in** that the restoring force of said aperture (4) is variable.

3. Flow meter according to Claim 1, **characterised in** that the axial displacement of said resistive body (5) is realised by means of a threaded rod (8) which is connected to said resistive body (5).

4. Flow meter according to Claim 1, **characterised in** that said aperture (4) is axially displaceable between said first defined point and a second defined point.

5. Flow meter according to Claim 1, **characterised in** that said axially displaceable aperture (4) presents the shape of a sleeve.

6. Flow meter according to Claims 1 and 4, **characterised in** that said first defined point is approximately located at the beginning of said overflow groove (7) in the direction of flow.

7. Flow meter according to Claim 1, **characterised in** at least one groove (7) presents a square enlargement of the cross-sectional area in the direction of flow.

8. Flow meter according to Claim 1, **characterised in** that the reactive area (9) of said aperture (4) is selected to be large.

9. Flow meter according to Claim 5, **characterised in** that said aperture sleeve (4) is guided on said resistive body (5).

10. Flow meter in accordance with the introductory clause of Claim 1, **characterised in** that said aperture (4), which is subjected to a restoring force, is axially displaceable from a first defined point, that said axially displaceable aperture (4) presents the shape of a sleeve, that said resistive body (5) has the configuration of a truncated cone, and that the large base of said truncated cone is located in the vicinity of said first defined stop point of said aperture sleeve (4).

11. Flow meter according to any of the preceding Claims, **characterised in** that said reactive area (9) of said aperture includes at least one groove (10) bridging the stop area (11) of said first defined stop point.

12. Flow meter according to any of the preceding Claims, **characterised in** that said resistive body (5) is exposed to sliding guidance by means of a bore on its end opposite to said threaded rod (8).

13. Flow meter according to any of the preceding Claims, **characterised in** that the fits on the guiding areas (12, 13) of said aperture (4) are selected so as to ensure a desired leak rate.

14. Flow meter according to Claim 13, **characterised in** that said guiding areas (12, 13) present a wear-resistant configuration.

15. Flow meter according to any of the preceding Claims, **characterised in** that the differential pressure Ap ahead and downstream of said aperture (4) is detected by means of two pressure sensors (15, 16) independently of each other, and that each of said two pressure sensors generates an electrical signal.

16. Flow meter according to Claim 15, **characterised in** that the electrical signals are supplied to an electronic circuit (16) for subsequent processing.

17. Flow meter according to any of the preceding Claims, **characterised in** that the flow meter is switched over to flow-through operation after its passage beyond the opening point 15.

## Revendications

1. Débitmètre destiné à déterminer la quantité de fluides en écoulement en utilisant un diaphragme (4) et un corps de résistance à l'écoulement (5) dans une cavité (6) qui présente une ouverture d'entrée (2) de l'écoulement et une ouverture de sortie (3) de l'écoulement, la pression différentielle entre l'ouverture d'entrée de l'écoulement et l'ouverture de sortie de l'écoulement étant mesurée à l'aide du diaphragme (4), caractérisé en ce que
- le diaphragme (4), qui est sollicité par une force de rappel, peut coulisser axialement à partir d'un premier point défini;
- le corps de résistance à l'écoulement (5) présente au moins une rainure de passage d'écoulement (7) s'étendant dans la direction longitudinale, et dont la surface de section transversale est variable; et
- la position du corps de résistance à l'écoulement (5) est réglable axialement.

2. Débitmètre selon la revendication 1, caractérisé en ce que la force de rappel du diaphragme (4) est variable.

3. Débitmètre selon la revendication 1, caractérisé en ce que le coulissement axial du corps de résistance à l'écoulement (5) est effectué à l'aide d'une tige filetée (8) qui est en liaison avec le corps de résistance à l'écoulement (5).

4. Débitmètre selon la revendication 1, caractérisé en ce que le diaphragme (4) peut coulisser axialement entre le premier et un second point défini.

5. Débitmètre selon la revendication 1, caractérisé en ce que le diaphragme (4) axialement coulissant, présente une forme de douille.

6. Débitmètre selon la revendication 1 et 4, caractérisé en ce que le premier point défini se situe environ au début de la rainure de passage d'écoulement (7) en se référant à la direction de l'écoulement.

7. Débitmètre selon la revendication 1, caractérisé en ce qu'au moins une rainure (7) présente un agrandissement quadratique de la surface de section transversale.

8. Débitmètre selon la revendication 1, caractérisé en ce que la surface de réaction (9) du diaphragme (4) est choisie de grande dimension.

9. Débitmètre selon la revendication 5, caractérisé en ce que la douille de diaphragme (4) est guidée sur le corps de résistance à l'écoulement (5).

10. Débitmètre selon le préambule de la revendication 1, caractérisé en ce que le diaphragme (4), qui est sollicité par une force de rappel, peut coulisser axialement à partir d'un premier point défini, en ce que le diaphragme (4) axialement coulissant, présente une forme de douille, en ce que le corps de résistance à l'écoulement (5) est d'une configuration en forme de tronc de cône, et en ce que la grande surface de base du tronc de cône se situe à proximité du premier point de butée défini de la douille de diaphragme (4).

11. Débitmètre selon l'une des revendications précédentes, caractérisé en ce que la surface de réaction (9) du diaphragme présente au moins une rainure (10) superposée à la surface de butée (11) du premier point de butée défini.

12. Débitmètre selon l'une des revendications précédentes, caractérisé en ce qu'à son extrémité opposée à celle où se trouve la tige filetée (8), le corps de résistance à l'écoulement (5), est soumis à un guidage glissant au moyen d'un alésage.

13. Débitmètre selon l'une des revendications précédentes, caractérisé en ce que les ajustements au niveau des surfaces de guidage (12, 13) de la douille de diaphragme (4) sont choisis de façon à garantir un débit de fuite souhaité.

14. Débitmètre selon la revendication 13, caractérisé en ce que les surfaces de guidage (12, 13) sont d'une configuration résistant à l'usure.

15. Débitmètre selon l'une des revendications précédentes, caractérisé en ce que la pression différentielle Δp avant et après le diaphragme (4) est relevée au moyen de deux capteurs de pression (29, 30) fonctionnant indépendamment l'un de l'autre, et chacun des deux capteurs de pression engendre un signal électrique respectif.

16. Débitmètre selon la revendication 15, caractérisé en ce que les signaux électriques sont transmis à un circuit électronique (16) pour la poursuite de leur traitement.

17. Débitmètre selon l'une des revendications précédentes, caractérisé en ce que le débitmètre, après dépassement du point d'ouverture (15), commute dans la position de passage.
